# EUROPEAN PATENT APPLICATION

(11) **EP 3 862 962 A1**
(43) Date of publication of application: **11.08.2021**
(21) Application number: 20156344.2
(22) Date of filing: 10.02.2020
(51) Int. Cl.: G06Q 50/04, G06Q 20/20

(54) **METHOD AND APPARTUS FOR IDENTIFYING AN ITEM SELECTED FROM A STOCK OF ITEMS**

(71) Applicant: Mettler-Toledo (Albstadt) GmbH, 72458 Albstadt (DE)
(72) Inventor: Moritz, Holger, 72458 Albstadt (DE); Moritz, Ursula, 72458 Albstadt (DE)
(74) Representative: Mettler-Toledo

(57) **Abstract**

The present invention relates to a method, an apparatus and a computer program for identifying an item selected from a stock of items.

## Description

The present invention relates to a method, an apparatus and a computer program for identifying an item selected from a stock of items.

The identification of items is, for example, of importance for assigning a price to an item in retail industry. A particular problem is to determine the price of bulk products, for example fresh fruit and vegetables sold in a supermarket. In a self-service environment, the customer may select fruit and vegetables from a stock. The price of the selected item is determined in accordance with the weight of the selected item.

To this end, the customer may present the selected fruit and vegetables to a shop assistant. The shop assistant, who may be trained to identify the selected item, may place the item on a scale, enter a product lookup (PLU) number associated with the item, and the price of the selected item is calculated based on the identification of the selected item and its weight. However, this approach is time-intensive for the supermarket staff.

Thus in recent years, self-checkout systems, for example self-checkout scales, have emerged wherein the weighing and the product identification are carried out by the customer. To this end, a keypad may be provided which comprises individual buttons that are provided with a representation, for example a symbol or a name, of the individual items. The identification of the item is carried out by pressing the respective button. However, this approach is difficult to apply to changing stocks and is impractical for a stock with a large variety of items. This problem may be overcome by a visualization of the symbols or names as icons on a display, for example a touch screen. This allows an adaptation to changing stocks. For large stocks, only a subset of the items of the stock may be simultaneously representable on the display. However, it may be possible to navigate through a menu structure which enables the visualization of the desired item. Alternatively, the scale may be provided with an input unit that allows to input the product lookup number of the respective item. The disadvantage of both approaches is that they are time-consuming for the customer. Furthermore, an unexperienced customer may not be able to operate such a self-checkout system.

As an alternative approach, US 5,426,282 discloses that a video image of an uncoded product is captured by a camera and displayed on a video monitor which is viewable by store personnel. A keyboard associated with the video monitor permits the store personnel to enter a product code corresponding to the product displayed on the video monitor. However, this approach again requires the assistance of store personnel and is thus expensive.

To overcome these problems, the use of image recognition systems in self-checkout systems has been suggested. However, state of the art image recognition does generally not allow to identify items sold in a supermarket with certainty. Taking this into account, EP 1 523 737 B1 discloses a point-of-sale self-checkout system wherein an analysis of an image of an item as captured by a video camera is used to determinate candidate items and to display those items on a display. The user may then choose one of the displayed items. If the product is not correctly identified by the system, the customer may enter a PLU by a keyboard, which is time-consuming and difficult for the unexperienced user.

To increase the probability of correct product identification, WO 2019/119047 A1 discloses a retail checkout terminal fresh produce identification system for visual identification of fresh produce wherein the system is trained by using machine learning. Where the item cannot be determined to a degree of accuracy, the system may present a subselection of items on screen for selection by a user. However, the choice of the user is limited to the presented subselection of items.

In the light of these problems in the prior art, it is the object of the present invention to present a method, an apparatus and a computer program for identifying an item selected from a stock of items in such a way that a quick identification of the item is possible even when it is selected from a large stock.

According to a first aspect of the present invention, this object is attained by a method for identifying an item selected from a stock of items, the method comprising:
- user selection of an item from the stock,
- application of an automatic recognition system to the user-selected item, the automatic recognition system being operative to determine a proper subset of correspondingly recognized items of the stock based on at least one recognition feature associated with the user-selected item and to output a recognition information representative of recognized items,
- displaying a visualization of the recognized items represented by the recognition information in a first display mode and simultaneously displaying a visualization of a first set of non-recognized items of the stock in a second display mode on a display, the first display mode and the second display mode being visually distinguishable,
- identification of the user-selected item among the visualized items by the user for further automatic processing of identification information representative of the user-selected item.

According to the first aspect of the present invention, there is provided a stock of items. Each item of the stock may be uniquely identified in terms of a set of identification features. These may include features which allow a coarse classification, for instance only a distinction into fruit or vegetables. Preferably, the identification of items may, however, be much finer, for instance identifying the specific variety like Jonagold apple, etc.

The method according to the invention comprises user selection of an item from the stock. This selection may comprise the selection of one single item or the selection of a plurality of items.

Each item of the stock may be associated with at least one recognition feature. Examples of such recognition features may include the size, the shape, the color, etc. of the item. Two different items of the stock may share some of the recognition features. For example, the different items may have the same color (for example, the item banana and the item organic banana share the feature that they are yellow).

The method according to the invention further comprises an application of an automatic recognition system to the user-selected item. The automatic recognition system is adapted to detect at least one of the recognition features associated with the user-selected item. Based on the detected recognition features, the automatic recognition system determines a subset R of recognized items. The subset R may include only one item, or it may include a plurality of different items. To this end, the automatic recognition system may comprise a data base including a mapping of each valid combination of recognized features (F₁, F₂, ..., F_{K}) to at least one item. In general, a valid combination of recognition features is mapped to more than one item. For example, the combination (red, round) may be mapped to "apple" and "tomato".

The recognized items are represented by recognition information r for further electronic processing. The recognition information may be digital information.

Each recognized item may be associated with a probability value (recognition probability) indicative of the probability that the recognized item corresponds to the user-selected item. A perfect automatic recognition system would determine only one recognized item for which the associated probability is one. Realistic automatic recognition systems, however, determine a plurality of recognized items, and the associated probability for each recognized item is smaller than one.

All items of the stock that are not among the recognized items are denoted non-recognized items. For each non-recognized item, the probability that this non-recognized item corresponds to the user-selected item may be smaller than a certain threshold probability.

The method further comprises displaying a visualization of the recognized items represented by the recognition information in a first display mode and simultaneously displaying a visualization of a first set of non-recognized items of the stock in a second display mode on a display, the first display mode and the second display mode being visually distinguishable. The first set of non-recognized items may be the set of all non-recognized items of the stock, or it may be a proper subset thereof. According to the invention, each item of the stock may thus be displayed on the display in two visually distinguishable display modes. The visualization may be via a symbolic representation of the item, for example via a pictogram or an icon. For instance, in the case that the item is an apple, the visualization may be via a symbolic representation of an apple or via the string "apple".

The display modes may be distinguishable in the following way: one display mode may be an icon in color, and the other display mode may be an icon in black and white. Additionally or alternatively, one of the two display modes may include a frame around an icon. Additionally or alternatively, one of the display modes may include blinking of an icon. In general, the first display mode may be a highlighted representation, while the second display mode may be a background representation.

The display may comprise a graphical user interface, for example a touch screen.

The method further comprises identification of the user-selected item among the visualized items. The user may identify the item via an input into a user interface. For example, he may touch the respective icon on the touch screen. The user may identify the user-selected item among the recognized items or among the non-recognized items. The identified user-selected item is represented by identification information. The identification information may be digital data. The identification information may be automatically processed by electronic data processing means.

While conventional methods comprise displaying a visualization of the recognized items only, the method according to the present invention comprises simultaneously displaying a visualization of the recognized items and a visualization of the first set of non-recognized items. Thus, even when the user-selected item is not among the recognized items, it may be among the items of the first set of non-recognized items. Thus, the user-selected item may be identifiable by the user without further navigation steps as compared to the prior art. The two visually distinguishable display modes allow to visually distinguish the recognized items from the non-recognized items. In particular, the user's attention may be drawn to the recognized items displayed in the first display mode. This may speed up the identification process.

The method may comprise training of the automatic recognition system based on artificial intelligence, in particular machine learning.

In principle, the first set of non-recognized items may contain all items from the stock that are not recognized items. However, in particular for a large stock, it may not be possible to display a visualization of all items of the stock simultaneously on the display. In this case it is preferable to divide the display into first and second regions and to group the items in the stock in mutually disjoint sets A₁, ..., Aₙ of items such that only the items in one set are being visualized in the second region of the display at the same time. It may be preferable to choose the disjoint sets such that the items in each of the sets share some property. For example, the set A₁ may contain all fruit, the set A₂ may contain all vegetables, and so forth. Then, it may be preferable to display a visualization of the recognized items in a first display mode in the first region. The set Aₖ including the recognized item with the highest recognition probability may be displayed in the second region. Those elements of Aₖ which are non-recognized items may be displayed in the second display mode. Preferably, the spatial arrangement of the visualization of the items of Aₖ is always the same. This increases usability. Furthermore, it is preferable to visualize the recognized items of Aₖ in the first display mode. The first display mode of the recognized items may be the same in the first and the second regions, or it may be visually distinguishable.

In one embodiment of the present invention, the detection of the recognition feature may be based on the interaction of radiation with the item. The automatic recognition system may thus be an image recognition system. The radiation may be in the optical range, or it may be in the infrared range.

As stated above, the subset R of correspondingly recognized items of the stock is determined based on at least one recognition feature associated with the user-selected item. Thus, it is preferable that the method comprises detecting whether a selected item is presented to the recognition system in a condition where a necessary recognition feature of the item is not detectable by the recognition system. Such a condition may be an unfavorable placement of the item with respect to the automatic recognition system. In case that the detection of the recognition feature is based on the interaction of radiation with the item, said condition may occur due to the presence of an object in the radiation path. For example, a hand of the user may be placed in the radiation path, or the item may be concealed by packaging, e. g. a bag.

It may be further preferable that the method includes outputting of an information indicative of the condition of non-detectability. The output may be visual or acoustical. For example, if the hand of a user is in the radiation path, the system may output a visual or an acoustical warning which allows the user to understand that his hand is in the radiation path. This may lead to an adapted user behavior and speed up the method. Once the condition of non-detectability is removed (e. g. the hand is removed from the radiation path), the method may proceed directly with displaying the visualization of the recognized items and the visualization of the non-recognized items.

In an embodiment of the invention, the method may comprise live-streaming of the condition in which the user-selected item is presented to the recognition system. This may comprise live-streaming of a video of the condition in which the user-selected item is presented to the recognition system on the display. In this way, the user may understand from the video that a necessary recognition feature of the item is not detectable by the system. For example, the user may understand from the video that the user-selected item is concealed by his hand. Furthermore, the user may observe that the user-selected item is fully visible after the removal of his hand from the radiation path. This provides additional feedback to the user regarding his behavior and may speed up the method.

The method may further comprise outputting an information indicative of a condition where an invalid combination of recognition features is detected by the recognition system. As explained above, the recognition system may comprise a data base including a mapping of each valid combination of recognition features to one or more items of the stock. However, there may also be invalid combinations of recognition features. For example, there may be a first item associated with a first recognition feature and there may be a second item associated with a second recognition feature different from the first recognition feature, but there may be no item in the stock associated with both the first recognition feature and the second recognition feature. Thus, if both the first item and the second item are presented simultaneously to the automatic recognition system, no item may be recognized.

The method may further comprise displaying a visualization of a second set of non-recognized items of the stock of items different from the first set of non-recognized items in response to a user request. As explained above, it may not be possible to display a visualization of all items of the stock simultaneously on the display. Thus a situation may arise where the user-selected item is not among the visualization of the recognized items and the visualization of the first set of non-recognized items. In this case the user may request that a second set of non-recognized items different from the first set of non-recognized items is visualized on the display. This user request may be provided to the system via an input unit.

Once the user-selected item is identified, the method according to the invention comprises further automatic processing of identification information representative of the user-selected item. The further automatic processing may be electronic data processing. The further automatic processing may include the generation of sales data in dependence on the identification information. The sales data may include weighing data of the item obtained by a weighing scale and/or price information obtained from a data base. The generation of sales data may include calculating the sales price of the user-selected item. The method may further include displaying the sales data on the display or printing of the sales data using a printer.

A second aspect of the present invention is an apparatus for identifying an item selected from a stock of items, the apparatus comprising:
- an automatic recognition system for recognizing a user-selected item, the automatic recognition system being operative to determine a proper subset of correspondingly recognized items of the stock based on at least one recognition feature associated with the user-selected item and to output a recognition information representative of recognized items,
- display means, the display means being operative to receive the recognition information from the automatic recognition system and to display a visualization of the recognized items represented by the recognition information in a first display mode and to simultaneously display a visualization of a first set of non-recognized items of the stock in a second display mode, the first display mode and the second display mode being visually distinguishable,
- user input means for receiving user input for identification of the user-selected item among the visualized items,
- processing means for further automatic processing of identification information representative of the user-selected item.

The automatic recognition system may be a conventional automatic recognition system comprising a CPU. Alternatively, it could be a combination of CPU and GPU or other accelerating hardware. It may use processing power in a network like a cloud-based or edge-based approach. The subset (R) may be determined using electronic data processing.

The automatic recognition system may comprise a camera and/or a multispectral sensor. The camera and/or the multispectral sensor may allow the detection of the recognition features based on the interaction of radiation with the item. The automatic recognition system may thus be an image recognition system. The automatic recognition system may comprise a plurality of cameras and/or a plurality of multispectral sensors. The plurality of cameras and/or multispectral sensors may be arranged to detect radiation in different spatial directions.

The apparatus may further comprise a weighing scale for measuring the weight of the user-selected item and/or a data base for storing price information. In this way, sales data including weighing data of the item and/or price information may be obtained. The apparatus may be part of a point-of-sale self-checkout environment.

In one embodiment, the apparatus may comprise a weighing scale and a camera for automatic image recognition, wherein a load plate of the scale comprises a patch field in the field of view of the camera for automatic white balance adjustment and/or color temperature adjustment of the camera. The weighing scale may comprise a bowl for receiving items, the bowl being arranged on the load plate. Then, the patch field may be realized by a white color of the load plate in a region which is not covered by the bowl. For example, the load plate may comprise a white color in the region of its circumferential border. This white-colored region serves as a patch field for the camera. Additionally or alternatively, the bowl may be black to avoid shadows of items that may be recognized as ghost articles. In this way, the influence of ambient light on the recognition result may be reduced.

A third aspect of the present invention is a computer program for identifying an item selected from a stock of items, the computer program comprising instructions which, when the program is executed by a computer, cause the computer to carry out the following steps:
- retrieving recognition data associated with the user-selected item from an automatic recognition system,
- determining a proper subset of correspondingly recognized items of the stock based on at least one recognition feature associated with the user-selected item to create recognition information representative of the recognized items,
- displaying a visualization of the recognized items represented by the recognition information in a first display mode and simultaneously displaying a visualization of a first set of non-recognized items of the stock in a second display mode on a display, the first display mode and the second display mode being visually distinguishable,
- further automatic processing of identification information representative of the user-selected item in response to a user input identifying the user-selected item among the visualized items.

In the following description, the invention will be explained in more detail with reference to the accompanying drawings in which
- Fig. 1a: illustrates a schematic perspective view of an apparatus according to the present invention comprising a weighing scale,
- Fig. 1b: illustrates a side view of the apparatus of Fig. 1 a,
- Fig. 2: illustrates a flowchart of a method according to the present invention,
- Fig. 3: illustrates the apparatus of Figs 1 a and 1 b showing a display view.

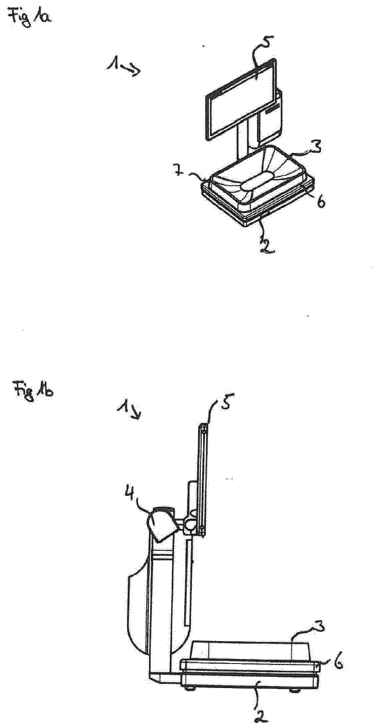

Figs 1a and 1b illustrate a perspective view and a side view of an apparatus 1 according to the present invention comprising a weighing scale having a bowl 3 for receiving a user-selected item and a weighing sensor 2. The apparatus 1 comprises an automatic recognition system having a camera 4. Thus the automatic recognition system of the illustrated example comprises an image recognition system, though the invention is not limited to this. The camera 4 takes a picture of a user-selected item placed in the bowl 3 and creates image data. This image data is compared with image data of items of a stock stored in a data base via electronic data processing. To this end, the automatic recognition system may comprise a CPU and/or accelerated hardware. In particular, it is checked whether recognition features of the user-selected item match recognition features of the items of the stock. In this way, a subset of recognized items is determined.

The weighing scale may further comprise a load plate 6 comprising a patch field 7 in the field of view of the camera 4 for automatic white balance adjustment and/or color temperature adjustment of the camera 4. To this end, the load plate 6 may comprise a white color in the region of its circumferential border. Additionally or alternatively, the bowl 3 may be black to avoid shadows of items that may be recognized as ghost articles. In this way, the influence of ambient light on the recognition result may be reduced.

Further, the apparatus comprises a display 5. The display 5 may comprise a touch screen. The display 5 allows to display a visualization of the recognized items in a first display mode and to simultaneously display a visualization of a first set of non-recognized items of the stock in a second display mode which is visually distinguishable from the first display mode.

The apparatus 1 further comprises processing means, for example a CPU, for further automatic processing of identification information representative of the user-selected item. For example, the apparatus 1 comprising the weighing scale may allow for price calculation based on weight data received from the weighing scale and price information received from a data base.

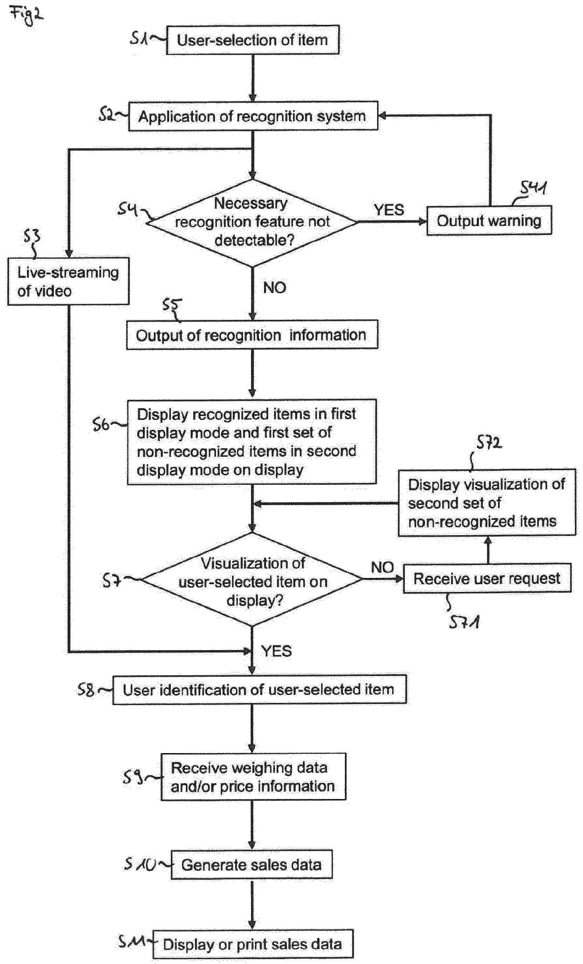

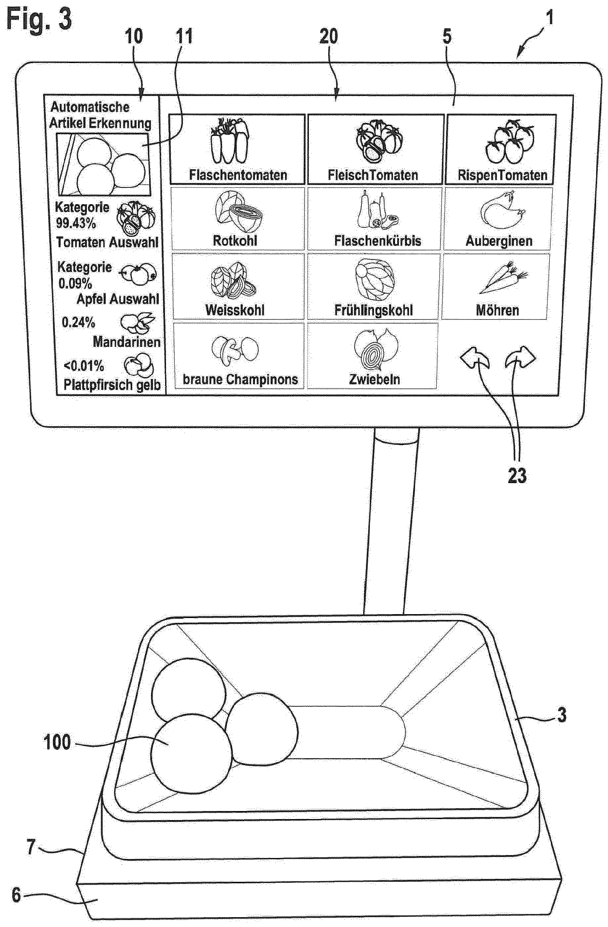

In the following, an embodiment of the method according to the present invention will be explained with reference to the flow chart of Fig. 2. A display view according to the method of the present invention is depicted in Fig. 3.

The method starts at S₁ with the user selection of an item from a stock. The stock may comprise bulk products arranged in baskets in a supermarket. For example, the user may select three tomatoes (user-selected item 100) from a basket of tomatoes and may place them in the bowl 3 of the apparatus 1 (see Fig. 3).

Then, at S₂, the automatic recognition system is applied to the user-selected item 100. In the present example, the camera 4 (not visible in Fig. 3) records an image of the user-selected item 100. In the embodiment shown in Fig. 3, the camera 4 also records a live video of the user-selected item 100 which is live-streamed in a first region 10 of the display 5 (S₃). The live-streaming 11 continuous until the user-selected item 100 is identified by the user (S₈, see below).

Next, it is verified whether a necessary recognition feature of the user-selected item 100 is not detectable (S₄). For example, the user may accidentally place his hand between the user-selected item 100 and the camera 4 so that the user-selected item 100 is concealed. Then the apparatus 1 may output an information indicative of the condition of the non-detectability. In one example, this output may be in the form of a warning symbol which is indicative of the fact that the user's hand is placed between the user-selected item 100 and the camera 4. In this way, the user may understand why the automatic recognition system is not able to determine a subset of correspondingly recognized items. Thus it is more likely that the user will remove his hand. Then the automatic recognition system may proceed directly with determining a subset of recognized items.

When all necessary recognition features are detectable by the automatic recognition system, the automatic recognition system will output a recognition information r (S₅) representative of the recognized items.

Then, at S₆, a visualization of the recognized items is displayed in a first display mode, and simultaneously a visualization of a first set of non-recognized items is displayed in a second display mode on the display 5. A possible visualization on the display 5 is shown in Fig. 3.

As it is depicted in Fig. 3, the recognized items are displayed as icons in a first region 10 of the display 5. Each item is associated with a certain recognition probability which is also displayed on the display 5. In the example, the system 1 is not able to distinguish between the different varieties of tomatoes and thus displays only the category "tomato". By touching the tomato item in the first region 10 of the display 5, a pop-up of the different varieties of tomatoes in the stock may be visualized on the display 5.

In a second region 20 of the display 5, a visualization of items of the stock in the form of icons is displayed. The icons are arranged in a matrix of four rows and three columns. In the example, the stock of items is divided into disjoint subsets of a size that allows for a simultaneous visualization of all items in one subset in the second region 20 of the display 5 at the same time. Preferably, the spatial arrangement of the icons corresponding to the items of one subset on the display is always the same. In the example shown in Fig. 3, tomatoes have the highest recognition probability. Thus, the subset containing tomatoes is displayed in the second region 20 of the display 5. The three varieties of tomatoes are among the recognized items, and their corresponding icons (arranged in the first row of icons in Fig. 3) are thus highlighted on the display 5 via a bright background (not visible in Fig. 3) and a frame. All items of the displayed subset that are not recognized items are non-recognized items (arranged in the second to fourth row of Fig. 3). They are displayed with a grey background (not visible in Fig. 3). That is, the recognized items are displayed in a first display mode (visualization in the first region 10 of the display 5 and highlighted in the second region 20 of the display 5), and the non-recognized items are displayed in a second display mode (grey background in the second region 20) which is visually distinguishable from the first display mode. This visualization allows for an easy understanding which items are recognized by the automatic recognition system.

In case that the user-selected item 100 is not visualized on the display (S₇), the user may enter a user request (S₇₁) by pressing the forward/backward buttons 23 displayed in the lower right corner of the display 5. Then, a visualization of a second set of non-recognized items will be displayed on the display (S₇₂). The user may browse within the subsets of non-recognized items by pressing respective forward/backward buttons until a visualization of the user-selected item 100 is presented on the display 5.

Then, the user identifies the user-selected item 100 (at S₈). In case that the display 5 is a touch screen, this may be achieved by touching the icon representative of the user-selected item 100 on the display 5.

Next, at S₉, weighing data and/or price information is received from a data base. This allows the generation of sales data at S₁₀. For example, the system may calculate the price of the three tomatoes based on the information that the user-selected items are tomatoes, their weight and their price per unit weight.

This sales data, for example the price, may be displayed on the display (S₁₁). Additionally or alternatively, it may be possible to print out the sales data by a printer.

## Claims

1. A method for identifying an item selected from a stock of items, the method comprising
- user selection of an item (100) from the stock (S₁),
- application (S₂) of an automatic recognition system to the user-selected item (100), the automatic recognition system being operative to determine a proper subset (R) of correspondingly recognized items of the stock based on at least one recognition feature associated with the user-selected item and to output a recognition information (r) representative of recognized items (S₅),
- displaying a visualization of the recognized items represented by the recognition information in a first display mode and simultaneously displaying a visualization of a first set of non-recognized items of the stock in a second display mode on a display (5), the first display mode and the second display mode being visually distinguishable (S₆),
- identification of the user-selected item among the visualized items by the user for further automatic processing of identification information representative of the user-selected item (S₈).

2. The method according to claim 1, wherein the detection of the recognition feature is based on the interaction of radiation with the item.

3. The method according to claim 1 or 2, wherein the method comprises detecting whether a user-selected item (100) is presented to the recognition system in a condition where a necessary recognition feature of the item is not detectable by the recognition system (S₄).

4. The method according to claim 3, wherein the method comprises outputting an information indicative of the condition of the non-detectability (S₄₁).

5. The method according to any of the preceding claims, wherein the method comprises live-streaming of a condition in which the user-selected item (100) is presented to the recognition system (S₃).

6. The method according to any of the preceding claims, wherein the method comprises outputting an information indicative of a condition where an invalid combination of recognized features is detected by the recognition system.

7. The method according to any of the preceding claims, wherein the method comprises displaying a visualization of a second set of non-recognized items of the stock of items different from the first set of non-recognized items in response to a user request (S₇, S₇₁, S₇₂).

8. The method according to any of the preceding claims, wherein the further automatic processing includes the generation of sales data in dependence on the identification information (S₁₀).

9. The method according to claim 8, wherein the sales data include weighing data of the item obtained by a weighing scale and/or price information obtained from a data base.

10. An apparatus for identifying an item selected from a stock of items, the apparatus comprising:
- an automatic recognition system for recognizing a user-selected item (100), the automatic recognition system being operative to determine a proper subset (R) of correspondingly recognized items of the stock based on at least one recognition feature associated with the user-selected item (100) and to output a recognition information (r) representative of recognized items,
- display means (5), the display means (5) being operative to receive the recognition information (r) from the automatic recognition system and to display a visualization of the recognized items represented by the recognition information (r) in a first display mode and to simultaneously display a visualization of a first set of non-recognized items of the stock in a second display mode, the first display mode and the second display mode being visually distinguishable,
- user input means for receiving user input for identification of the user-selected item (100) among the visualized items,
- processing means for further automatic processing of identification information representative of the user-selected item (100).

11. The apparatus according to claim 10, wherein the automatic recognition system comprises a camera (4) and/or a multispectral sensor.

12. The apparatus according to claim 10 or 11, wherein the apparatus further comprises a weighing scale for measuring the weight of the user-selected item and/or a data base for storing price information.

13. The apparatus according to anyone of claims 10 to 12, comprising a weighing scale and a camera (4) for automatic image recognition, wherein a load plate (6) of the scale comprises a patch field (7) in the field of view of the camera (4) for automatic white balance adjustment and/or color temperature adjustment of the camera (4).

14. A computer program for identifying an item selected from a stock of items, the computer program comprising instructions which, when the program is executed by a computer, cause the computer to carry out the following steps:
- retrieving recognition data associated with the user-selected item (100) from an automatic recognition system,
- determining a proper subset (R) of correspondingly recognized items of the stock based on at least one recognition feature associated with the user-selected item (100) to create recognition information (r) representative of the recognized items,
- displaying a visualization of the recognized items represented by the recognition information in a first display mode and simultaneously displaying a visualization of a first set of non-recognized items of the stock in a second display mode on a display, the first display mode and the second display mode being visually distinguishable,
- further automatic processing of identification information representative of the user-selected item (100) in response to a user input identifying the user-selected item (100) among the visualized items.

15. A computer-readable data carrier having stored thereon the computer program of claim 14.
